# EUROPEAN PATENT APPLICATION

(11) **EP 3 636 115 A1**
(43) Date of publication of application: **15.04.2020**
(21) Application number: 19201703.6
(22) Date of filing: 07.10.2019
(51) Int. Cl.: A47J 31/44

(54) **NOZZLE FOR DISPENSING STEAM AND STEAM DISPENSING DEVICE EQUIPPED WITH SAID NOZZLE**

(30) Priority: 08.10.2018 IT 201800009241
(71) Applicant: PNR Italia S.r.l., 27058 Voghera (IT)
(72) Inventor: TONINI, Federico, 6826 Riva San Vitale (CH)
(74) Representative: Torti, Carlo Maria Emilio

(57) **Abstract**

A nozzle (100) for dispensing steam, said nozzle (100) comprising an outer hollow body (1) and an inner hollow body (2) at least partially accommodated in a first inner space (17) defined by said outer hollow body (1), wherein said inner hollow body (2) defines a second inner space (25) delimited by a side wall (29) extending between two opposite end portions (21 M, 21V) of said inner hollow body (2), wherein a first end portion (21 M) of said inner hollow body (2) defines an inlet opening (250) for introducing steam into said second inner space (25), wherein said inner hollow body (2) comprises a plurality of dispensing conduits (252) for dispensing steam from said second inner space (25) outwards, wherein each of said dispensing conduits (252) puts said second inner space (25) into communication with the outside of said inner hollow body (2), wherein said outer hollow body (1) comprises at least one opening (12) which puts said first inner space (17) into communication with the outside, wherein at least one of said inner hollow body (2) and outer hollow body (1) may be switched by rotation and/or translation with respect to said outer hollow body (1) or said inner hollow body (2), respectively.

## Description

### TECHNICAL FIELD OF THE INVENTION

The present invention belongs to the field of steam dispensing. In particular, the present invention belongs to the field of steam dispensing for preparing hot beverages such as cappuccino, latte, tea, coffee and similar hot beverages. In detail, the present invention relates to a steam dispensing nozzle, in particular but not only for making beverages of the aforesaid type. Again, in detail, the present invention relates to a nozzle of the aforesaid type adapted to allow adjusting the flow rate of the steam dispensed.

### BACKGROUND ART

In known coffee machines widely used both in public places such as coffee shops, restaurants, pubs and the like, but also in households, steam dispensing occurs by means of a dispensing nozzle arranged at the end of a dispensing tube which extends from a boiler. Said nozzle defines one or more dispensing orifices and performs a primary function, for example but not only, in preparing milk for cappuccino because it determines both the outlet direction of the steam which is necessary for triggering the ideal turbulences in order to obtain a conveniently dense foam, and the flow rate of the steam, i.e. the quantity of steam introduced into the container in a given period of time in order to determine the final temperature of the heated mixture.

Although they may be appreciated under various viewpoints such as for example, the simplicity of use, reliability, duration, and also the manufacturing and assembly simplicity (therefore with contained impact on the overall cost of the coffee machine), the nozzles of known type briefly described above however are affected by various drawbacks and/or disadvantages that the Applicant intends overcoming or at least minimizing by means of the present invention.

Indeed, in recent years, the consumption of coffee and cappuccino has increased significantly in almost all geographical areas, wherein the most winning commercial strategies have been based on the offer of products based on traditional beverages while being slightly different, in particular more adequate to uses and traditions but also to tastes and/or specific preferences.

In the case of cappuccino for example, according to the geographical areas, different types thereof are currently offered with regards to the preparation methods, in particular with regards to the temperature and/or the condition of the milk (frothing degree with more or less foam), which is added to the coffee.

The above commercial strategies in turn have resulted in the need to modulate the steam dispensing in terms of flow rate, pressure and/or temperature at the dispensing nozzle outlet.

However, the nozzles of known type do not allow the above modulation; indeed, according to the known art, the flow rate of the steam is adjusted upstream of the nozzle, in particular by means of a valve operated by the operator, wherein said valve has little possibility of being adjusted or may even be switched between two statuses alone, open and closed.

The main object of the present invention therefore is the one of overcoming or at least minimizing the problems summarized above and affecting the steam dispensing devices according to the prior art.

In particular, a first object of the present invention is to make available a steam dispensing nozzle which allows accurately adjusting the quantity of steam dispensed according to needs and/or circumstances, an adjustment that is impossible or highly approximate when a simple ball or needle valve positioned upstream of the dispensing nozzle, is used.

Moreover, the intent of the present invention is to make a steam dispensing nozzle which allows selecting from among various values of the steam outlet surface, and therefore of the instantaneous flow rate thereof, thereby making possible processing different volumes of milk, with different steam flow rates, in order to always obtain a foam with optimal features and in conformity with the specific needs.

And again, the objects of the present invention include the one of making available a steam dispensing nozzle which allows the above modulations and/or adjustments according to simple and immediate methods, which results in contained manufacturing, assembly and maintenance costs, which has reduced volume and sizes, and which can be used in machines for dispensing hot beverages of known type (for example coffee machines for coffee shops and/or household use) without requiring substantial changes to the machines themselves.

### DESCRIPTION OF THE PRESENT INVENTION

The present invention is based on the general consideration according to which the above preset objects may be achieved by a device which allows the outflow surface of the steam to be modulated and adjusted at will and/or according to needs and/or circumstances, i.e. the size and/or overall surface available for the steam for the outlet from the dispensing nozzle.

The present invention is also based on the further consideration according to which the adjustment of the outflow surface may be effectively obtained by a nozzle which comprises one or more dispensing orifices which may be "concealed" (masked) in percentages according to the needs and/or circumstances.

On the basis of the above considerations, and also in consideration of the problems and/or drawbacks affecting the devices and/or steam dispensing nozzles according to the prior art, the object of the present invention according to a first embodiment is a nozzle (100) for dispensing steam, said nozzle (100) comprising an outer hollow body (1) and an inner hollow body (2) at least partially accommodated in a first inner space (17) defined by said outer hollow body (1), wherein said inner hollow body (2) defines a second inner space (25) delimited by a side wall (29) extending between two opposite end portions (21 M, 21V) of said inner hollow body (2), wherein a first end portion (21 M) of said inner hollow body (2) defines an inlet opening (250) for introducing steam into said second inner space (25), wherein said inner hollow body (2) comprises one or more dispensing conduits (252) for dispensing steam from said second inner space (25) outwards, wherein each of said dispensing conduits (252) puts said second inner space (25) into communication with the outside of said inner hollow body (2), wherein said outer hollow body (1) comprises at least one opening (12) which puts said first inner space (17) into communication with the outside, wherein at least one of said inner hollow body (2) and outer hollow body (1) may be switched by rotation and/or translation with respect to said outer hollow body (1) or said inner hollow body (2), respectively; wherein at least one of said dispensing conduits (252) extends through said side wall (29) of said inner hollow body (2), therefore wherein said at least one dispensing conduit (252) leads into a dispensing orifice (253) and a delivery orifice (254) formed in the outer side surface (21) and inner side surface (255), respectively, of said side wall (29) of said inner hollow body (2), and therefore wherein the alignment or overlapping degree of the dispensing orifice (253) of said at least one dispensing conduit (252) of said inner hollow body (2) and said at least one opening (12) of said outer hollow body (1) may be adjusted by switching said inner hollow body (2) or said outer hollow body (1), respectively, by rotation and/or translation.

According to one embodiment, at least two of said dispensing conduits (252) each extend through said side wall (29) of said inner hollow body (2), wherein each of said at least two dispensing conduits (252) leads into a dispensing orifice (253) and a delivery orifice (254) obtained in the outer side surface (21) and inner side surface (255), respectively, of said side wall (29) of said inner hollow body (2), and therefore wherein the alignment or overlapping degree of the dispensing orifices (253) of said at least two dispensing conduits (252) of said inner hollow body (2) and said at least one opening (12) of said outer hollow body (1) may be adjusted by switching said inner hollow body (2) or said outer hollow body (1), respectively, by rotation and/or translation.

According to one embodiment, said at least two dispensing conduits (252) have dispensing orifices which differ in shape and/or size.

According to one embodiment, said at least two dispensing conduits (252) each have a substantially circular cross section with different diameter.

According to one embodiment, a first of said at least two dispensing orifices (253) may be totally concealed and the second of said at least two dispensing orifices (253) may be at least partially concealed by switching said inner hollow body (2) or outer hollow body (1), respectively, by rotation and/or translation.

According to one embodiment, said outer hollow body (1) and inner hollow body (2) are mutually restrained by shape coupling.

According to one embodiment, a first of said outer hollow body (1) and inner hollow body (2) defines a radial groove (22) with circular development, while the second of said outer hollow body (1) and inner hollow body (2) defines a radial projection or rib (18) with circular development, wherein elastic restraining means (3) are accommodated in said radial groove (22), and wherein said outer hollow body (1) and inner hollow body (2) are mutually restrained by contrast between said elastic means (3), said groove (22) and said radial projection (18).

According to one embodiment, said elastic restraining means comprise an elastic ring (3).

According to one embodiment, said elastic ring (3) is a Seeger-type elastic ring.

According to one embodiment, said radial groove (22) extends from the outer side surface (21) of said inner hollow body (2) into the thickness of said outer side wall (29), wherein said projection or rib (18) extends from the inner side surface (155) of said outer hollow body (2) towards said first inner space.

According to one embodiment, said outer hollow body (1) is adapted to be restrained in fixed position to a pipe, wherein said inner hollow body (2) may be switched by rotation with respect to said outer hollow body (1).

According to one embodiment, with reference to said inlet opening (250), the dispensing orifice (253) of said at least one dispensing conduit (252) is positioned downstream with respect to the delivery orifice (254) of said at least one dispensing conduit (252).

According to one embodiment, said outer hollow body (1) comprises a tubular side wall (110) extending between two opposite end portions (11M, 11V), wherein said at least one opening (12) of said outer hollow body (1) is notch-shaped and extends from one of the end edges of said tubular side wall (110) parallel to the extension direction of said tubular side wall.

According to one embodiment, the second end portion of said side wall of said inner hollow body is closed by an end wall which defines an at least partially conical inner surface joined to said inner side surface.

According to one embodiment, said end wall has a further orifice which puts said second inner space into communication with the outside.

The object of the present invention is also a device for dispensing steam, said device comprising at least one boiler for generating steam and at least one conduit extending from said boiler, said device comprising at least one nozzle (100) according to one of embodiments summarized above.

The object of the present invention is also a machine for dispensing hot beverages such as coffee, cappuccino, tea and/or similar hot beverages, said machine comprising a device according to the above embodiment.

Possible further embodiments of the present invention are defined in the claims.

### BRIEF DESCRIPTION OF THE DRAWINGS

The present invention is further clarified in the following by means of the following detailed description of possible embodiments depicted in the drawings, wherein features and/or corresponding or equivalent component parts of the present invention are identified by the same numerals. It is in any case worth noting that the present invention is not limited to the embodiments described in the following and depicted in the drawings; contrarily, all those variants and/or modifications of the embodiments described in the following and depicted in the accompanying drawings, which are apparent and obvious to persons skilled in the art, fall within the scope of the present invention.

In the drawings:
- Figure 1 shows a side view of the dispensing nozzle according to an embodiment of the present invention;
- Figure 2 shows a longitudinal section of the dispensing nozzle according to the plane A-A in Figure 1;
- Figure 3 shows an isometric view of the dispensing nozzle according to an embodiment of the present invention;
- Figure 4 shows a partial isometric sectional view of the dispensing nozzle according to an embodiment of the present invention;
- Figure 5 shows an exploded isometric view of the dispensing nozzle according to an embodiment of the present invention;

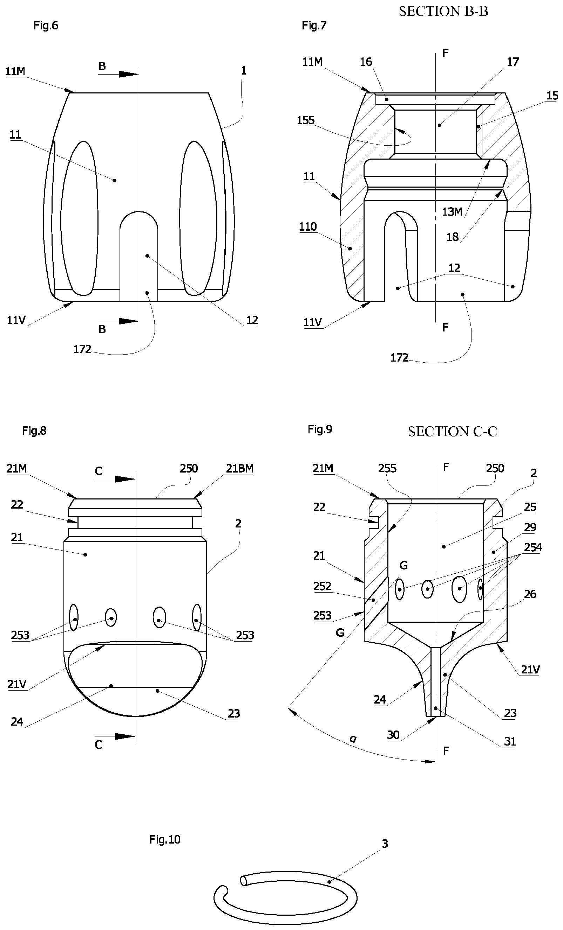

- Figure 6 shows a side view of the outer body or casing of the dispensing nozzle according to an embodiment of the present invention;
- Figure 7 shows a longitudinal lateral section of the outer body or casing according to the plane B-B in Figure 6;
- Figure 8 shows a side view of the inner body or casing of the dispensing nozzle according to an embodiment of the present invention;
- Figure 9 shows a longitudinal lateral section of the inner body or casing according to the plane C-C in Figure 8;
- Figure 10 shows a dimetric view of the elastic retaining ring used in a dispensing nozzle according to an embodiment of the present invention.

### DETAILED DESCRIPTION OF THE PRESENT INVENTION

The present invention is particularly applicable in the field of steam dispensing for the purpose of preparing hot beverages such as cappuccino, hot milk, latte, tea, coffee and the like, this being the reason whereby the present invention is described in the following with particular reference to the applications thereof in the field of preparing hot beverages of the aforesaid type, in particular cappuccino. It is in any case worth noting that the possible applications of the present invention are not limited to the ones described in the following, and in particular to dispensing steam for the purposes of preparing hot beverages of the aforesaid type. Contrarily, the present invention can be conveniently applied in all those cases in which an accurate, simple and reliable adjustment of the steam dispensing methods becomes required or convenient.

In the drawings, the device according to the embodiment of the present invention therein depicted is identified by numeral 100 and comprises a first outer hollow body 1 which defines a first inner space 17, the outer hollow body 1 communicating with the outside through a first end opening 171 obtained in a first end portion 11M, and a second end opening 172 obtained in the second end portion 11V opposite to said first end portion 11M. The outer hollow body 1 further comprises a side wall 110 extending between two opposite end portions 11M and 11V and delimits the inner space or inner cavity 17, wherein the portion of the inner surface 155 (of the surface facing the space 17) of the side wall 110 close to the end portion 11M defines engagement and fastening means 15 (for example but not exclusively, a threading) for fastening the hollow body 1, for example to the end of a steam dispensing pipe (not depicted), for example connected to the end opposite to a boiler for producing and/or generating steam (not depicted). It therefore is deduced that with the hollow body 1 connected to the aforesaid dispensing conduit or pipe, the steam outlet from said conduit or pipe is introduced into the inner space 17.

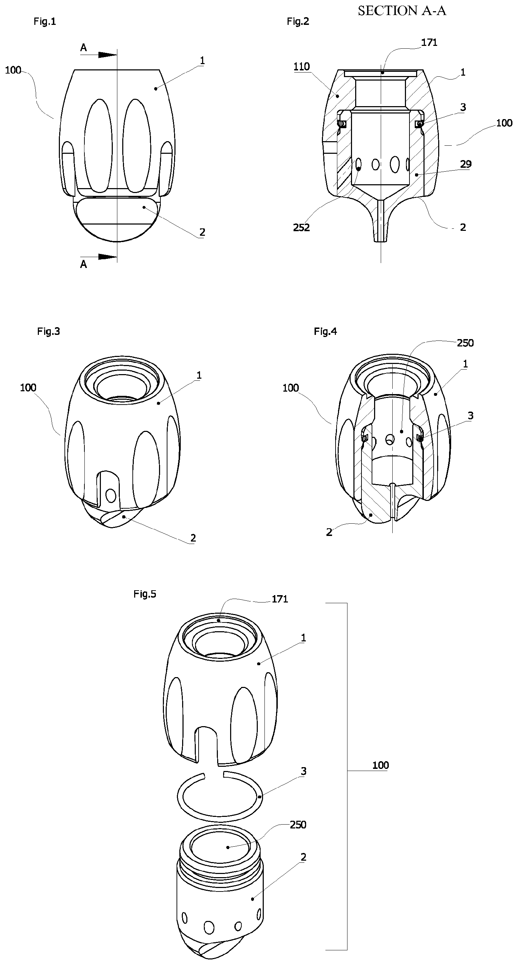

The nozzle 100 further comprises an inner hollow body 2 which in the operating condition (and therefore in the assembly condition completed by the nozzle, figures 1 and 4), is at least partially accommodated in the inner space 17 defined by the outer hollow body 1.

The inner hollow body 2 in turn defines an inner space 25 (or inner cavity) delimited by a side wall 29 which extends between a first end portion 21M and a second end portion 21V opposite to said first end portion 21M, wherein the end portion 21M defines an inlet opening 250 by means of which the inner space 25 is put into communication with the outside. Therefore it is deduced that with the nozzle completely assembled (figures 1 to 4) and fastened to the above dispensing conduit, the steam outlet from said conduit is introduced into the inner space 17 and therefore into the inner space 25 defined by the inner hollow body 2. The inner hollow body 2 further comprises one or more conduits 252 which extend through the side wall 29, wherein therefore each of the conduits 252, which may be obtained for example but not exclusively by means of milling the side wall 29, puts the inner space 25 into communication with the outside. Each conduit 252 in particular extends between a delivery orifice 254 obtained in the inner side surface 255 (facing towards the inner space 25) of the side wall 29 and a dispensing orifice 253 obtained in the outer surface 21 of the side wall 29. Therefore it is deduced that with the nozzle completely assembled (with the hollow body 2 accommodated in the hollow body 1) and fastened to a dispensing or feeding conduit or pipe, the steam outlet from said conduit is introduced into the inner space 17 and therefore into the inner space 25 defined by the hollow body 2, and is dispensed therefrom outwards of the hollow body 2 through one or more dispensing conduits 252.

As mentioned above, the nozzle 100 according to the present invention allows selecting the number of conduits 252 through which the steam may be dispensed, and also adjusting the degree of occlusion or opening for each conduit, and ultimately adjusting the steam outflow surface.

Indeed for this purpose, the hollow body 2 is accommodated in the hollow body 1 (according to methods clarified and described in detail later) so as to be rotated with respect to the hollow body 1, in particular about a rotation axis F which substantially is coincident with the longitudinal extension axis of the inner space 17 defined by the hollow body 1.

Moreover, the hollow body 1 comprises at least one notch-shaped opening 12 which extends from the end portion of 11V of the side wall 110 along a direction which is substantially parallel to said axis F.

Therefore, it can be deduced that by rotating the hollow body 2 with respect to the hollow body 1 according to the above methods, the relative position of the dispensing orifices 253 and of said one or more notches 12, and therefore the degree of overlapping of said orifices 253 and of said one or more notches 12, may be adjusted, in particular which orifices 253 (and to what extent) are to be obscured (concealed and therefore closed) by the side wall 29 or rather be at least partially positioned at said one or more notches 12, and therefore left free and open.

In this regard, it is worth noting that according to the present invention and in consideration of the various intended uses of the nozzle 100, the conduits 252 (and the related delivery orifices 254 and dispensing orifices 253) and or the notches or openings 12 may be shaped and/or sized in a different manner from the one depicted in the drawings. For example, conduits 252 having circular section but with different diameters or also conduits with the same flow rate but with cross section having a different shape, e.g. polygonal (square, rectangular, etc.), may be provided according to the present invention.

Moreover, also the number of conduits 252 may be selected according to the needs and/or intended uses, wherein also the distance between the dispensing orifices may vary according to the needs and/or circumstances, given that the orifices 253 may for example, be arranged in groups with different mutual distances and/or shape and/or sizes.

Likewise according to the present invention, also the shape, the size and the number of notches 12 may be selected according to the intended use of nozzle 12, wherein according to the present invention, at least one opening 12 may be provided, which is not shaped as a notch (as depicted) rather as a through hole, for example a circular and/or polygonal through hole, and with variable sizes. Moreover, although the dispensing orifice 253 in the embodiment of the nozzle depicted in the drawings is positioned downstream of the delivery orifice 254 with respect to the inlet opening 250 for each conduit 252, wherein therefore axis G, which joins the centers of the dispensing orifice 253 and of the delivery orifice 254, forms an angle α with axis F which is smaller than 90°; according to the present invention, embodiments are also possible according to which the dispensing orifice 253 is positioned upstream of the delivery orifice 254 for at least one of the conduits 252, wherein here, axis G, which joins the centers of the dispensing orifice 253 and of the delivery orifice 254, forms an angle α with axis F which is greater than or equal to 90°.

In the case of the embodiment of the nozzle depicted in the drawings, the rotation of body 2 with respect to body 1 is facilitated by a gripping portion 23 (adapted to be gripped between thumb and index finger, for example) defined by the end portion 21V of the hollow body 2. Indeed as depicted, said adjustment or gripping portion 23 is defined by an end wall bordered at the outside by two hollow opposed walls 24 joined to give portion 23 substantially the shape of a petal, said end wall being bordered inwards (towards the inner space 25) by a frustoconical surface 26 joined to the inner surface 255. Moreover, one or more further dispensing conduits 31 may be obtained in the gripping or adjustment portion 23, as depicted, each of which leading into a dispensing orifice 30 and putting the inner space 25 into communication with the outside.

Again, according to the embodiment of the nozzle depicted in the drawings, the positioning and the fastening of the hollow body 2 in the hollow body 1 are obtained according to the following methods.

As depicted, the inner surface 155 of the hollow body 1 comprises a tapered portion 13M which narrows towards the inner space 17 and is shaped as a circular crown on a plane perpendicular to axis F. Likewise, the end portion 21M of body 2 defines an abutment surface 21BM, it also being circular-crown shaped on a plane perpendicular to axis F.

Moreover, body 1 defines a radial projection or rib 18 with circular development which extends from the side wall 110 towards the inner space 17. In a corresponding manner, the hollow body 2, close to the end portion 21M, has a radial groove 22 with circular development which extends from the outer side surface 21 perpendicular to axis A1 (and therefore in the thickness of wall 29).

For the positioning and restraint of the body 2 in body 1, first an elastic ring 3 is inserted into groove 22, for example a Seeger-type elastic ring, as depicted.

Then, the hollow body 2 is inserted into the hollow body 1 from the end portion 11 V, in which the progressive insertion of the body 2 into body 1 translates first into a contrast between the surface downstream of projection 18 and ring 3, which is then compressed and inserted into groove 22 as much as needed so it may exceed projection 18. When projection 18 is exceeded by ring 3, ring 3 expands again, going against the surface upstream of projection 18, thereby avoiding body 2 from coming out of body 1 but allowing the rotation thereof with respect to body 1.

Moreover, when projection 18 is exceeded by ring 3, the abutment surface 21BM defined by the end portion 21M of body 2 abuts against the circular crown surface 13M of body 1.

The extraction of body 2 from body 1 may occur in corresponding manner by acting in traction on body 2, for example on portion 23, with sufficient force to compress ring 3 against the surface upstream of projection 18 as much as needed so it may exceed projection 18 again.

It has therefore been shown by the detailed description above of the embodiments of the present invention depicted in the drawings, that the present invention allows the desired results to be obtained and the drawbacks encountered in the prior art to be overcome or at least limited.

In particular, the present invention makes available a dispensing nozzle which allows adjusting the outlet flow of the steam according to simple and immediate methods and operations.

Indeed, the nozzle according to the present invention allows the quantity of steam dispensed and/or the dispensing direction of the steam to be accurately adjusted according to needs and/or circumstances (in particular by obscuring dispensing conduits with a predefined inclination and leaving free others with different inclination), adjustments which would otherwise be impossible or at least highly approximate by means of a simple ball or needle valve positioned upstream of the dispensing nozzle.

Moreover, the present invention achieves a steam dispensing nozzle which allows selecting from among various values of the steam outlet surface, and therefore of the instantaneous flow rate thereof, thereby making possible processing different volumes of milk, with different steam flow rates, in order to always obtain a foam with optimal features and in conformity with the specific needs.

And again, a steam dispensing nozzle is made available by means of the present invention, which allows the above modulations and/or adjustments according to simple and immediate methods, which results in contained manufacturing, assembly and maintenance costs, which has reduced volume and sizes, and which can be used in machines for dispensing hot beverages of known type (for example coffee machines for coffee shops and/or household use) without requiring substantial changes to the machines themselves.

Although the present invention was clarified above by means of the detailed description of the embodiments thereof depicted in the drawings, the present invention is not limited to the embodiments described and depicted in the drawings; contrarily, all those variants and/or modifications of the embodiments described and depicted in the accompanying drawings, which are apparent and obvious to persons skilled in the art, fall within the scope of the present invention. For example, a wide selection of materials for making bodies 1 and/or 2 is allowed according to the present invention, in which the bodies 1 and/or 2 may be made optionally by melting, molding, die casting and/or solid milling.

Moreover, although body 1 in the embodiment of the present invention has a threading for fastening to a pipe, and therefore body 2 may rotate with respect to body 1, alternative embodiments are possible according to the present invention, in which body 2 has fastening means (e.g. a threading) for fastening to a pipe, and in which the outer body 1 may be rotated with respect to the inner body 2.

The scope of protection of the present invention is therefore defined by the claims.

## Claims

1. A nozzle (100) for dispensing steam, said nozzle (100) comprising an outer hollow body (1) and an inner hollow body (2) at least partially accommodated in a first inner space (17) defined by said outer hollow body (1), wherein said inner hollow body (2) defines a second inner space (25) delimited by a side wall (29) extending between two opposite end portions (21M, 21V) of said inner hollow body (2), wherein a first end portion (21M) of said inner hollow body (2) defines an inlet opening (250) for introducing steam into said second inner space (25), wherein said inner hollow body (2) comprises one or more dispensing conduits (252) for dispensing steam from said second inner space (25) outwards, wherein each of said dispensing conduits (252) puts said second inner space (25) into communication with the outside of said inner hollow body (2), wherein said outer hollow body (1) comprises at least one opening (12) which puts said first inner space (17) into communication with the outside, wherein at least one of said inner hollow body (2) and outer hollow body (1) may be switched by rotation and/or translation with respect to said outer hollow body (1) or said inner hollow body (2), respectively; **characterized in that** at least one of said dispensing conduits (252) extends through said side wall (29) of said inner hollow body (2) **and therefore in that** said at least one dispensing conduit (252) leads into a dispensing orifice (253) and a delivery orifice (254) formed in the outer side surface (21) and inner side surface (255), respectively, of said side wall (29) of said inner hollow body (2), **and in that** the alignment or overlapping degree of the dispensing orifice (253) of said at least one dispensing conduit (252) of said inner hollow body (2) and said at least one opening (12) of said outer hollow body (1) may be adjusted by switching said inner hollow body (2) or said outer hollow body (1), respectively, by rotation and/or translation.

2. A nozzle (100) according to claim 1, **characterized in that** at least two of said dispensing conduits (252) extend each through said side wall (29) of said inner hollow body (2) **and therefore in that** each of said at least two dispensing conduits (252) leads into a dispensing orifice (253) and a delivery orifice (254) obtained in the outer side surface (21) and inner side surface (255), respectively, of said side wall (29) of said inner hollow body (2), **and in that** the alignment or overlapping degree of the dispensing orifices (253) of said at least two dispensing conduits (252) of said inner hollow body (2) and said at least one opening (12) of said outer hollow body (1) may be adjusted by switching said inner hollow body (2) or said outer hollow body (1), respectively, by rotation and/or translation.

3. A nozzle (100) according to claim 2, **characterized in that** said at least two dispensing conduits (252) have dispensing orifices which differ in shape and/or size.

4. A nozzle (100) according to one of claims 2 or 3, **characterized in that** said at least two dispensing conduits (252) have each a substantially circular cross section with different diameter.

5. A nozzle (100) according to one of claims 2 to 4, **characterized in that** a first of said at least two dispensing orifices (253) may be totally concealed and the second of said at least two dispensing orifices (253) may be at least partially concealed by switching said inner hollow body (2) or outer hollow body (1), respectively, by rotation and/or translation.

6. A nozzle (100) according to one of claims 1 to 5, **characterized in that** said outer hollow body (1) and inner hollow body (2) are mutually restrained by shape coupling.

7. A nozzle (100) according to claim 6, **characterized in that** a first of said outer hollow body (1) and inner hollow body (2) defines a radial groove (22) with circular development, while the second of said outer hollow body (1) and inner hollow body (2) defines a radial projection or rib (18) with circular development, **in that** elastic restraining means (3) are accommodated in said radial groove (22), **and in that** said outer hollow body (1) and inner hollow body (2) are mutually restrained by contrast between said elastic means (3), said groove (22) and said radial projection (18).

8. A nozzle (100) according to claim 7, **characterized in that** said elastic restraining means comprise an elastic ring (3).

9. A nozzle (100) according to claim 8, **characterized in that** said elastic ring (3) is a Seeger-type elastic ring.

10. A nozzle (100) according to one of claims 7 to 9, **characterized in that** said radial groove (22) extends from the outer side surface (21) of said inner hollow body (2) into the thickness of said outer side wall (29), **and in that** said projection or rib (18) extends from the inner side surface (155) of said outer hollow body (2) towards said first inner space.

11. A nozzle (100) according to one of claims 1 to 10, **characterized in that** said outer hollow body (1) is adapted to be restrained in fixed position to a pipe, **and in that** said inner hollow body (2) may be switched by rotation with respect to said outer hollow body (1).

12. A nozzle (100) according to one of claims 1 to 11, **characterized in that** with reference to said delivery opening (250), the dispensing orifice (253) of said at least one dispensing conduit (252) is positioned downstream with respect to the delivery orifice (254) of said at least one dispensing conduit (252).

13. A nozzle (100) according to one of claims 1 to 12, **characterized in that** said outer hollow body (1) comprises a tubular side wall (110) extending between two opposite end portions (11M, 11V), **and in that** said at least one opening (12) of said outer hollow body (1) is notch-shaped and extends from one of the end edges of said tubular side wall (110) parallel to the extension direction of said tubular side wall.

14. A device for dispensing steam, said device comprising at least one boiler for generating steam and at least one conduit extending from said boiler, **characterized in that** said device comprises at least one nozzle (100) according to one of claims 1 to 13 applied to the end portion of said at least one conduit opposite said at least one boiler.

15. A machine for dispensing hot beverages such as coffee, cappuccino, tea and/or similar hot beverages, **characterized in that** said machine comprises a device according to claim 14.
